(19) **Europäisches Patentamt**
**European Patent Office**
**Office européen des brevets**

(11) **EP 4 592 520 A1**

(12) **EUROPEAN PATENT APPLICATION**
published in accordance with Art. 153(4) EPC

| | |
|---|---|
| (43) Date of publication:<br>**30.07.2025 Bulletin 2025/31** | (51) International Patent Classification (IPC):<br>**F03D 1/06** (2006.01) |
| (21) Application number: **24736941.6** | (52) Cooperative Patent Classification (CPC):<br>**F03D 1/06;** Y02E 10/72; Y02P 70/50 |
| (22) Date of filing: **02.01.2024** | (86) International application number:<br>**PCT/CN2024/070206** |
| | (87) International publication number:<br>**WO 2024/141106 (04.07.2024 Gazette 2024/27)** |
| (84) Designated Contracting States:<br>**AL AT BE BG CH CY CZ DE DK EE ES FI FR GB<br>GR HR HU IE IS IT LI LT LU LV MC ME MK MT NL<br>NO PL PT RO RS SE SI SK SM TR**<br>Designated Extension States:<br>**BA**<br>Designated Validation States:<br>**KH MA MD TN**<br><br>(30) Priority: **30.12.2022  CN 202211733479<br>29.12.2023  CN 202311863161** | (71) Applicant: **Zhejiang Goldwind Science &<br>Technology Co., Ltd.<br>Wenzhou, Zhejiang 325026 (CN)**<br><br>(72) Inventors:<br>• **ZHOU, Jingwei<br>Beijing 100176 (CN)**<br>• **ZHAI, Endi<br>Beijing 100176 (CN)**<br><br>(74) Representative: **Hoffmann Eitle<br>Patent- und Rechtsanwälte PartmbB<br>Arabellastraße 30<br>81925 München (DE)** |

(54) **FORWARD SWEPT FAN BLADE, DESIGN METHOD AND MANUFACTURING METHOD THEREFOR AND WIND TURBINE**

(57)    The present application relates to a forward swept fan blade, a design method and manufacturing method therefor and a wind turbine. The forward-swept fan blade comprises: a blade body, extending in the length spanwise direction between a root and a tip of the blade; and a pitch axis, extending and vertically penetrating through the center of a root circle. With respect to the pitch axis, on the downstream side of the middle of the blade in the length spanwise direction, the blade deviates in a direction from a trailing edge to a leading edge. Using the forward-swept fan blade in the embodiment of the present application can enable the blade to generate forward torsional deformation during operation, so as to counteract the trend of the blade deviating from the optimal lift-to-drag ratio, thus achieving the purpose of minimum loss of the optimal power coefficient at different rotating speeds, and increasing the overall power generating capacity of wind turbines.

Fig. 5

## Description

**CROSS-REFERENCE** TO RELATED APPLICATION

The present application claims priority to Chinese patent application No. 202211733479.0, filed on December 30, 2022, and Chinese patent application No. 202311863161.9, filed on December 29, 2023, the contents of which are both incorporated herein by reference in their entireties.

TECHNICAL FIELD

The present disclosure relates to the technical field of wind power generation, and in particular, relates to a forward-swept wind turbine blade, design method and manufacturing method therefor, and wind turbine system.

BACKGROUND

The blades of the wind turbine will undergo torsion deformation in the operation process. When the torsion deformation is large, the blade will deviate from the optimal lift-to-drag ratio, resulting in the decrease of the optimal power coefficient in the performance curve of the wind turbine at the rated speed, causing the loss of annual power generation of the wind turbine.

SUMMARY

Embodiments of the present disclosure provide a forward-swept wind turbine blade, design method, manufacturing method therefor, and wind turbine system, which can cause the blade to generate positive direction torsion deformation during operation, offset the tendency of the blade to deviate from the optimal lift-to-drag ratio, achieve the purpose of minimizing the loss of the optimal power coefficient at different rotational speeds, and improve the overall power generation of the wind turbine.

In an aspect, embodiments of the present application provide a forward-swept wind turbine blade, which includes: a blade body extending in a length spanwise direction between a root region and a tip region of a blade; and a pitch axis extending and running perpendicularly through a center of a pitch circle of the root region, wherein an offset in a direction from a trailing edge to a leading edge with respect to the pitch axis is provided in the blade behind a middle of the blade in the length spanwise direction.

In another aspect, embodiments of the present application provide a wind turbine system, which includes the aforementioned forward-swept wind turbine blade.

In yet another aspect, embodiments of the present application provide a design method for the aforementioned forward-swept wind turbine blade, including: obtaining an initial shear center distribution of the blade in the length spanwise direction; correcting the initial shear center distribution based on a target adjustment function to obtain a corrected shear center distribution; establishing a blade model according to the corrected shear center distribution, and calculating a wind turbine power coefficient loss value based on the blade model; determining the corrected shear center distribution as a target shear center distribution, under a condition that the wind turbine power coefficient loss value is less than a convergence threshold; and designing the forward-swept wind turbine blade according to the target shear center distribution.

In still yet another aspect, embodiments of the present application provide a manufacturing method for the forward-swept wind turbine blade, including: placing a blade mold; and producing a forward-swept wind turbine blade using the blade mold, wherein an offset in a direction from a trailing edge to a leading edge with respect to a pitch axis is provided in the forward-swept wind turbine blade behind a middle of the blade in the length spanwise direction, and the pitch axis extends and runs perpendicularly through a center of a pitch circle of the root region of the forward-swept wind turbine blade.

According to the forward-swept wind turbine blade provided in embodiments of the present application, due to the offset in the direction from the trailing edge to the leading edge in the length spanwise direction behind the middle of the blade, the aerodynamic center distribution of the tip region of the blade is closer to the leading edge compared with the shear center distribution after deformation of the blade, which allows the tip region of the blade to produce a positive direction torsion deformation, thereby offsetting part of the clockwise pitching-down moment of the blade to a certain extent, resulting in an increase in the angle of attack, avoiding excessive deviation of the operation angle of attack from the design angle of attack, and thus enabling the blade to approach the optimal lift-to-drag ratio, achieving the goal of minimizing losses of the optimal power coefficient at different rotational speeds, and enhancing the overall power generation capacity of the wind turbine system.

BRIEF DESCRIPTION OF THE DRAWINGS

Features, advantages, and technical effects of embodiments of the present application will be described below with reference to the accompanying drawings.

Fig. 1 is a schematic diagram of blade element of a blade at a position r in a spanwise direction according to an embodiment of the present application;
Fig. 2 is a diagram of performance curves of a wind turbine system according to an embodiment of the present application;
Fig. 3 is a diagram of a flap-wise deformation of a blade according to an embodiment of the present application;
Fig. 4 is a diagram of an edgewise deformation of a blade according to an embodiment of the present application;

Fig. 5 is a comparative diagram of a non-forward-swept blade and a forward-swept blade in a pre-bent state according to an embodiment of the present application;

Fig. 6 is a comparative diagram of shear center distribution variation in a spanwise direction for a non-forward-swept blade and a forward-swept blade according to an embodiment of the present application;

Figs. 7a-7c are force analysis diagrams after deformation of a non-forward-swept blade according to an embodiment of the present application;

Figs. 8a-8c are force analysis diagrams after deformation of a forward-swept blade according to an embodiment of the present application;

Fig. 9 is a comparative diagram of shapes of a non-forward-swept blade and a forward-swept blade in a pre-bent state in a blade root coordinate system according to an embodiment of the present application;

Fig. 10 is a comparative diagram of torsion deformation of blade tips of a non-forward-swept blade and a forward-swept blade with a wind speed according to an embodiment of the present application;

Fig. 11 is a comparative diagram of performance curves of a wind turbine system with a non-forward-swept blade and a wind turbine system with a forward-swept blade according to an embodiment of the present application;

Fig. 12 is a normalized power graph for a wind turbine system with a non-forward-swept blade and a wind turbine system with a forward-swept blade according to an embodiment of the present application;

Fig. 13 is a flow diagram of a design method for a forward-swept wind turbine blade according to an embodiment of the present application;

Fig. 14 is a flow diagram of a manufacturing method for a forward-swept wind turbine blade according to an embodiment of the present application; and

Fig. 15 is a flow diagram of a design method for a forward-swept wind turbine blade according to an embodiment of the present application.

## DETAILED DESCRIPTION

Hereinafter, embodiments of the present application will be described with reference to the accompanying drawings. The following detailed description and accompanying drawings serve to exemplify the principles of the present application, and the scope of the present application is not limited to the preferred embodiments described but defined by the claims.

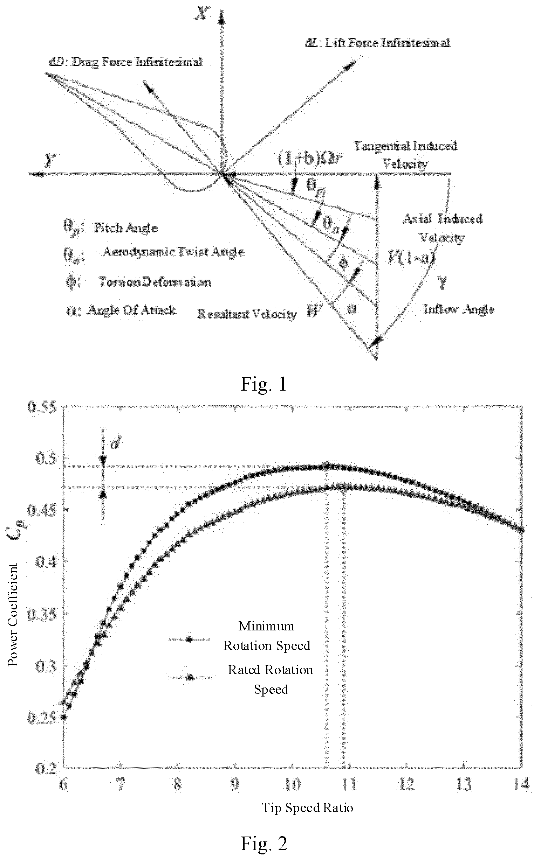

Fig. 1 is a schematic diagram of blade element of a blade at a position r in a spanwise direction according to an embodiment of the present application. With reference to Fig. 1, the blade elements under the action of the wind speed V and the rotation speed $\Omega$ generate an inflow

angle $\gamma$, which is expressed as:

$$\gamma = \arctan[V(1-a)/\Omega r(1+b)]$$

Another representation of the inflow angle $\gamma$ is:

$$\gamma = \theta_p + \theta_a + \phi + \alpha$$

where $a$ and b are the axial and tangential induction factors respectively, $\theta_p$ is a pitch angle, $\theta_a$ is an aerodynamic twist angle, $\phi$ is a torsion deformation, and $\alpha$ is an angle of attack. The torsion deformation $\phi$ is also referred to as a blade nose-down torsion deformation, and the direction of the torsion deformation of the blade elements in Fig. 1 is clockwise.

According to the blade element momentum theory, the blade elements generate the lift force dL and the drag force dD under the action of the angle of attack $\alpha$, and their projections in the X-axis and Y-axis directions are $dF_a$ and $dF_t$ respectively.

The tip speed ratio of the wind turbine blade is defined as: $\lambda = \Omega R / V$, the local tip speed ratio $\lambda_r$ is: $\lambda_r = \Omega r / V$, and then the power coefficient $C_p$ of the wind turbine is expressed as:

$$C_p = \frac{8}{\lambda^2} \int_0^R b(1-a)\lambda_r^3 d\lambda_r$$

where $R$ is the distance from the center of the hub to the blade tip, and the induction factors $a$ and $b$ are derived from the current operation state of the blade by iteration based on the blade element momentum theory.

The curve describing the relation between the power coefficient $C_p$ and the tip speed ratio $\lambda$ is also referred to as the performance curve of the wind turbine system, where the tip speed ratio $\lambda$ is obtained by fixing the reference rotation speed $\Omega$ and changing the wind speed V, and the shapes of the performance curves of the wind turbine system at different reference rotation speeds $\Omega$ are different.

Fig. 2 is a diagram of performance curves of a wind turbine system according to an embodiment of the present disclosure, where the abscissa is the tip speed ratio $\lambda$, and the ordinate is a power coefficient $C_p$. It can be seen from Fig. 2 that the maximum value of $C_p$ of the performance curve of the wind turbine system at the rated rotation speed is lower than the maximum value of $C_p$ of the performance curve of the wind turbine system at the minimum rotation speed, and with a decrease of d (i.e. the wind turbine power coefficient loss value described below). This is because the torsion deformation generated by the blade at the rated rotation speed is larger; and under the condition that the inflow angles are the same, the operation angle of attack of the blade with larger torsion deformation is reduced, and the operation angle of attack deviates from the designed angle of attack too much, which causes the blade to deviate from the optimal lift-to-drag ratio greatly, thereby causing the maximum value $C_p$ of the performance curve of the wind turbine system at the rated rotation speed to be lower, and finally causing annual power generation loss.

In addition to torsion deformation, the flap-wise deformation and the edgewise deformation are also generated by the aerodynamic action of the blade.

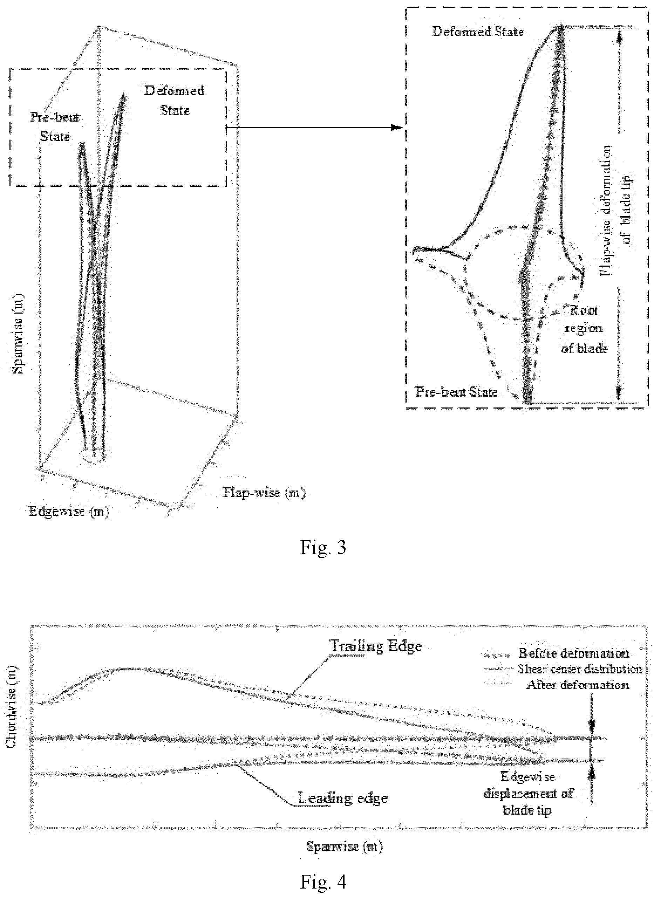

Fig. 3 is a diagram of a flap-wise deformation of a blade according to an embodiment of the present application. It can be seen from Fig. 3 that, under the action of aerodynamic force, the flap-wise deformation of the blade is generated from the pre-bent state, and the direction of the flap-wise deformation is consistent with the direction of wind speed. The pre-bent state refers to the arrangement of the neutral axis facing away from the pitch axis in the flap-wise direction when the blade is in the stationary state, so as to increase the tower clearance and reduce the risk of the blade colliding with the tower after deformation. The neutral axis refers to the intersection line of two neutral planes when the blade bears loads in the flap-wise direction (i.e. the direction perpendicular to the rotation plane of the wind rotor, and the downwind direction being positive) and the edgewise direction (i.e. the direction parallel to the rotation plane of the wind rotor, and the clockwise direction being positive). The pitch axis refers to the straight line which is from the center point of the pitch circle of the root region of the blade to the blade side and is perpendicular to the plane of the pitch circle of the blade, the direction from the root region to the tip region of the blade being the positive direction. Fig. 4 is a diagram of an edgewise deformation of a blade according to an embodiment of the present application. It can be seen from the edgewise displacement of the blade tip that the blade contour line and the shear center distribution generate the edgewise deformation under the aerodynamic force. Compared with that before the edgewise deformation, the blade contour line and the shear center distribution of the blade after the edgewise deformation offset from the blade trailing edge to the blade leading edge. The shear center distribution refers to the distance from the shear center to the leading edge divided by the local chord length (i.e. the chord length of the blade from the leading edge of the blade to a certain position along the length span) in percentage. The shear center refers to the collection of points in the blade cross-section that are subjected to in-plane loads (lift force and drag force) without torsion deformation.

In general, in the structural design state without a forward-swept blade, the neutral axis, the pitch axis, and the shear center distribution of the blade are almost coincident in theory due to the reason that the main beam material of the blade is unfolded in the spanwise direction; when the blade deforms under the action of aerodynamic force, the position of the shear center of the blade in space changes; if the shear center distribution of the blade is close to the leading edge in the design stage, the blade will generate a negative direction torsion, and have a tendency of lower head deformation, resulting in a lower maximum value $C_p$; otherwise, if the shear center distribution of the blade is away from the leading edge and close to the trailing edge, the negative direction torsion tendency of the blade can be effectively offset, achieving the effect of restoring $C_p$.

Illustratively, the shear center distribution can be designed away from the leading edge by placing fiberglass on the leading edge of the blade, adjusting the position of the web, or adjusting the main beam of the blade closer to the trailing edge, to increase the maximum of $C_p$, thus requiring adjustments to the manufacturing process parameters of the blade and the layout within the cavity of the blade. However, it is complex and time-consuming to adjust the manufacturing process parameters of the blade, and it can disrupt the linear arrangement of the composite lay-ups to adjust the layout within the cavity of the blade. Therefore, there is a need for an embodiment that can achieve that the shear center distribution of the blade is away from the leading edge and closer to the trailing edge without changing the structural design layout of the blade.

Based on the above analysis, embodiments of the present application provide a forward-swept wind turbine blade (hereinafter referred to simply as a forward-swept blade). The forward-swept wind turbine blade includes a blade body and a pitch axis, the blade body extending spanwise along a length between a root region and a tip region of the blade, and the pitch axis extending and passing perpendicularly through the center of the pitch circle of the root region of the blade; with respect to the pitch axis. The blade has an offset in the direction from the trailing edge to the leading edge after the middle of the blade in the spanwise direction with respect to the pitch axis.

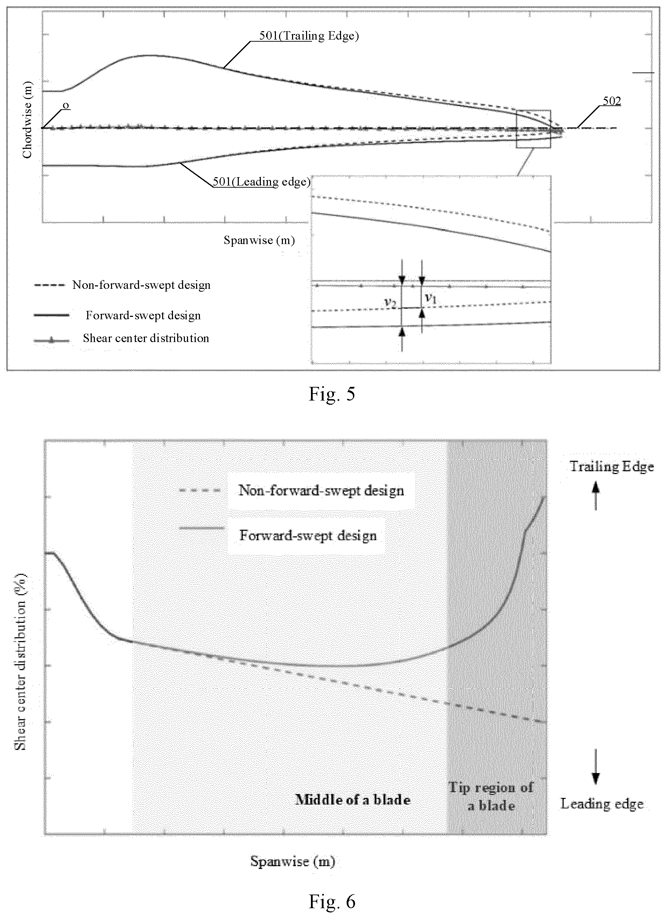

Referring to Fig. 5, the forward-swept blade shown in Fig. 5, i.e. a forward-swept wind turbine blade (shown in solid lines) as provided in an embodiment of the present application, includes a blade body 501 that extends in a length spanwise direction between the root region and the tip region of the blade, and a pitch axis 502 that extends and passes perpendicularly through the center O of the pitch circle of the root region. It can be seen that the forward-swept blade has an offset in the direction from the trailing edge to the leading edge behind the middle of the blade in the length spanwise direction with respect to the pitch axis 502 and the non-forward-swept blade (indicated by the dashed line).

Also shown in Fig. 5 are the shear center distribution of the forward-swept blade and the non-forward-swept blade in the pre-bent state (represented by solid lines marked with triangles), it can be seen from a partial enlarged view of the tip region of the blade that the distance between the shear center distribution and the leading edge of the non-forward-swept blade (i.e., the situation represented by the non-forward-swept design in the following drawings) is $v_1$, and the distance between the shear center distribution and the leading edge of the forward-swept blade is $v_2$, where $v_2 > v_1$, indicating that the shear center distribution of the forward-swept blade is further away from the leading edge and closer to the trailing edge.

Fig. 6 is a comparative diagram of shear center distribution variation in a spanwise direction for a non-forward-swept blade and a forward-swept blade. It can be seen from Fig. 6 that the shear center distribution of the forward-swept blade (shown in solid lines) is further away from the leading edge and closer to the trailing edge in the middle of the blade and tip region of the blade than in the non-forward-swept blade (shown in dashed lines).

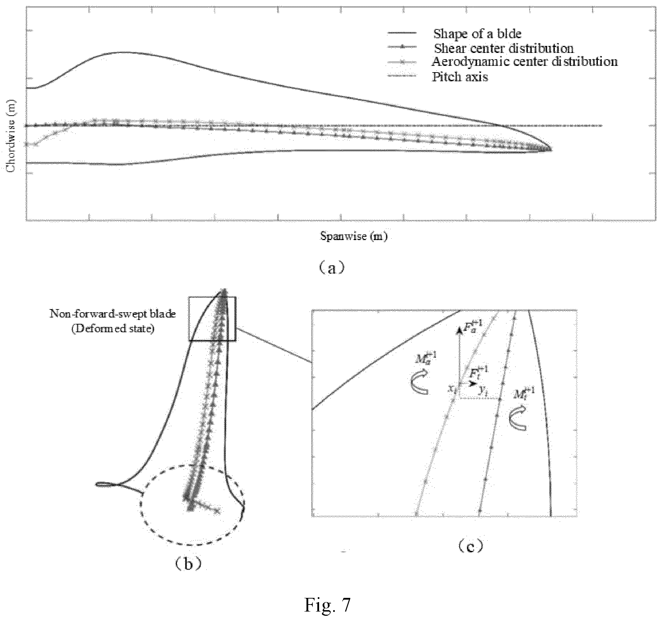

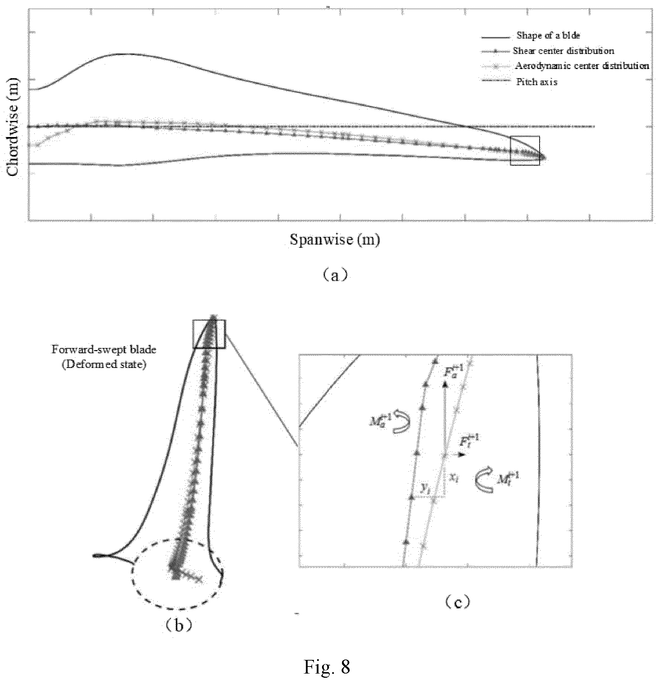

With reference to Figs. 7a-7c and Figs. 8a-8c, a force and deformation analysis is performed on the non-forward-swept blade and the forward-swept blade.

Figs. 7a and 8a show the shape (shown in solid lines), the shear center distribution (shown in solid lines with a delta sign), the aerodynamic center distribution (shown in solid lines with a cross sign), and the pitch axis (shown in dashed lines) of a non-forward-swept blade and a forward-swept blade respectively.

Fig. 7b is a force diagram of the non-forward-swept blade after deformation viewed from the blade tip to the blade root of the blade, and Fig. 7c is a partial enlarged view of the blade tip of Fig. 7b to clearly show the relative relationship between the shear center distribution and the aerodynamic center distribution at the blade tip after deformation of the non-forward-swept blade.

As can be seen from Figs. 7a-7c , the aerodynamic center distribution of the blade is closer to the trailing edge than to the shear center distribution in the middle of the blade and the tip region of the blade away from the root region of the blade after the deformation of the non-forward-swept blade. Taking the cross-section i + 1 in Fig. 7c as an example, the axial force $F_a^{i+1}$ applied to the cross-section i + 1 generates an aerodynamic torque $M_a^{i+1} = F_a^{i+1}y_i$ ($y_i$ is a chord-direction force arm) in a clockwise direction relative to the shear center distribution; the tangential force $F_i^{j+1}$ applied to the cross-section i + 1 also generate an aerodynamic torque $M_i^{j+1} = F_i^{j+1}x_i$ ($x_i$ is an axial force arm) in a clockwise direction relative to the shear center distribution; because $M_a^{i+i}$ and $M_i^{j+1}$ are both in the clockwise direction, the overall aerodynamic torque of the cross-section i + 1 is expressed as: $M_{sum}^{i+1} = M_a^{i+1} + M_i^{j+1}$, and also because the clockwise direction is represented as a negative direction in the blade root coordinate system, $M_a^{i+i} + M_i^{j+1} < 0$, and the direction of $M_{sum}^{i+1}$ is also negative, that is, the cross-section i + 1 generates a negative direction torsion deformation. That is, the middle of the blade and root region of the blade of the non-forward-swept blade will generate a torsion deformation in the negative direction during operation.

Fig. 8b is a force diagram of the forward-swept blade after deformation viewed from the blade tip to the blade root, and Fig. 8c is a partial enlarged view of the vicinity of the blade tip of Fig. 8b to clearly show the relative relationship between the shear center distribution and the aerodynamic center distribution at the blade tip the forward-swept blade after deformation.

As can be seen from Figs. 8a-8c, the aerodynamic center distribution of the blade is closer to the leading edge than the shear center distribution near the blade tip after the forward-swept blade is deformed. Taking the cross-section i + 1 in Fig. 8c as an example, the axial force $F_a^{i+1}$ applied to the cross-section i + 1 generates an aerodynamic torque $M_a^{i+1} = F_a^{i+1}y_i$ ($y_i$ is a chord-direction force arm) in an anticlockwise direction relative to the shear center distribution; the tangential force $F_i^{j+1}$ applied to the cross-section i + 1 generates an aerodynamic torque $M_i^{j+1} = F_i^{j+1}x_i$ ($x_i$ is an axial force arm) in a clockwise direction relative to the shear center distribution; because $M_a^{i+i}$ and $M_i^{j+1}$ are in opposite directions, the overall aerodynamic torque of the cross-section i + 1 is expressed as: $M_{sum}^{i+1} = -M_a^{i+1} + M_i^{j+1}$, and the direction of $M_{sum}^{i+i}$ depends on the value of $-M_a^{i+1} + M_i^{i+1}$, if $-M_a^{i+1} + M_i^{i+1} > 0$, the direction of $M_{sum}^{i+1}$ is positive, that is, the cross-section i + 1 generates a torsion deformation in the negative direction. That is to say, the forward-swept blade can generate a positive direction torsion deformation at the blade tip during operation.

As described above, since the forward-swept wind turbine blade in embodiments of the present application has an offset in the direction from the trailing edge to the leading edge behind the middle of the blade in the spanwise direction, the aerodynamic center distribution of the tip region of the blade is closer to the leading edge than the shear center distribution after the deformation of the blade, which can cause the tip region of the blade to generate a positive direction torsion deformation, offsetting the clockwise pitching-down moment of the middle of the blade to a certain extent, thereby causing the angle of attack to increase, avoiding the operation angle of attack from deviating too much from the design angle of attack, and thus enabling the blade to approach the optimal lift-to-drag ratio, achieving the purpose of minimizing the loss of the optimal power coefficient at different speeds, and improving the overall power generation of the wind turbine system.

In some embodiments, the offset in the direction from the trailing edge to leading edge direction may also exist only between the middle of the blade and the blade tip, and there is no offset at the blade tip in the direction from the trailing edge to leading edge, that is, the blade tip is still on the pitch axis.

In addition, in the forward-swept wind turbine blade of the embodiment of the present application, only the geometric shape of the blade is required to be adjusted so as to realize the design of the shear center distribution of the blade away from the leading edge and closer to the trailing edge, and the effect of accurately controlling the torsion deformation, thus not only reducing the modification of the structural design of the blade, thereby avoiding the adjustment of the manufacturing process parameters of the blade, but also not requiring the adjustment of the layout in the cavity of the blade, thereby maintaining the linear arrangement of the main beam and the web along the pitch axis, and avoiding the problems of material wrinkles and defects that may occur during the manufacturing process.

It should be noted that in the embodiments of the present application, the distance from the section where the middle of the blade is located to the pitch circle of the root region is 1/5 to 3/5 of the length of the blade, and the section within this range has a clockwise low head moment, which can be subjected to an offset treatment in the direction from the trailing edge to the leading edge to generate a positive direction torsion deformation.

In some embodiments, for a forward-swept wind turbine blade having an offset at the tip region of the blade, the tip point of the tip region of the blade is in the direction from the trailing edge to the leading edge, a distance by which the tip point deviates from a flap-wise plane of the blade is 0.2m to 1.5m, and the flap-wise plane of blade is defined by the pitch axis and the flap-wise direction of the blade.

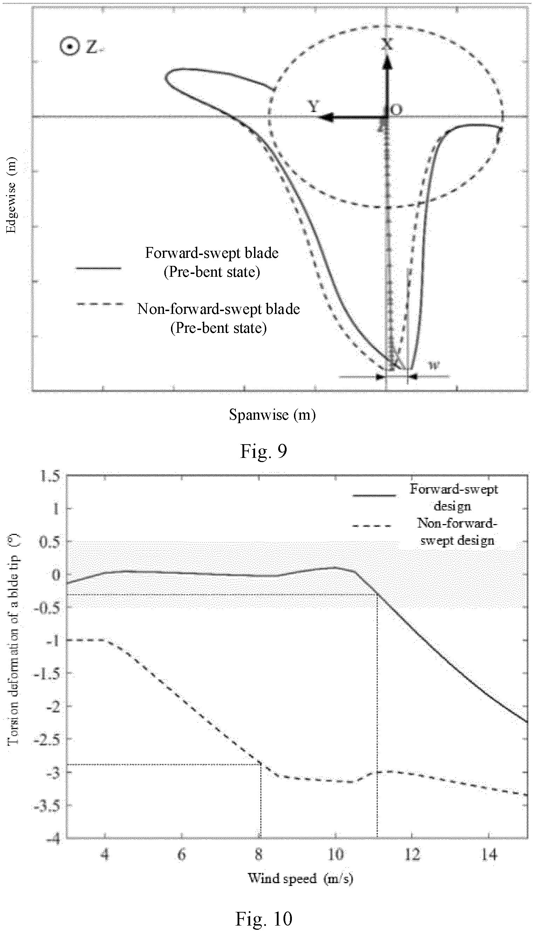

Specifically, refer to Fig. 9, which provides a comparative diagram of shapes of a non-forward-swept blade and a forward-swept blade in a pre-bent state in a blade root coordinate system according to an embodiment of the present application. The origin of the blade root coordinate system is the center O of the pitch circle of the root region, and the X axis, the Y axis, and the Z axis of the blade root coordinate system respectively correspond to the flap-wise direction, the edgewise direction, and the pitch axis of the blade. In the blade root coordinate system, the pitch axis extends outwards perpendicular to the center of the circle (see the mark in the upper left corner of the figure), and the pitch axis and the flapwise direction of the blade j ointly define a flap-wise plane (X-Z plane) of the blade, and the negative direction of the Y axis is the direction from the trailing edge to the leading edge.

It can be seen from Fig. 9 that the distance w that the tip point of the forward-swept blade in the pre-bent state deviates from the X-Z plane in the negative direction of the Y axis in the blade root coordinate system is 0.2m to 1.5m, which is much larger than the distance that the tip point of the non-forward-swept blade in the pre-bent state deviates from the X-Z plane in the negative direction of the Y axis in the blade root coordinate system.

The positive direction torsion deformation and power improvement effect of the forward-swept blade when the distance w is 0.2m to 1.5m will be described in detail below in conjunction with Figs. 10 to 12.

It can be seen from Fig. 10 that since the shear center distribution of the tip region of the blade of the non-forward-swept blade is closer to the leading edge, it is easy to produce a torsion deformation in the negative direction under the action of the aerodynamic twist angle. Therefore, the blade tip torsion deformation at a wind speed of 8 m/s may reach -3° ; however, the shear center distribution of the tip region of the blade of the forward-swept blade is closer to the trailing edge, and the anticlockwise aerodynamic torque $M_a{}^{i+1}$ can cause the tip region of the blade to twist in a direction of increasing the angle of attack, thereby offsetting part of the clockwise pitching-down moment of the middle of the blade to a certain extent. Therefore, the blade tip torsion deformation at a wind speed of 11 m/s can be maintained between -0.5° and 0.5°, thereby ensuring that the operation angle of attack of the blade does not deviate too much from the design angle of attack, making the blade close to the optimal lift-to-drag ratio.

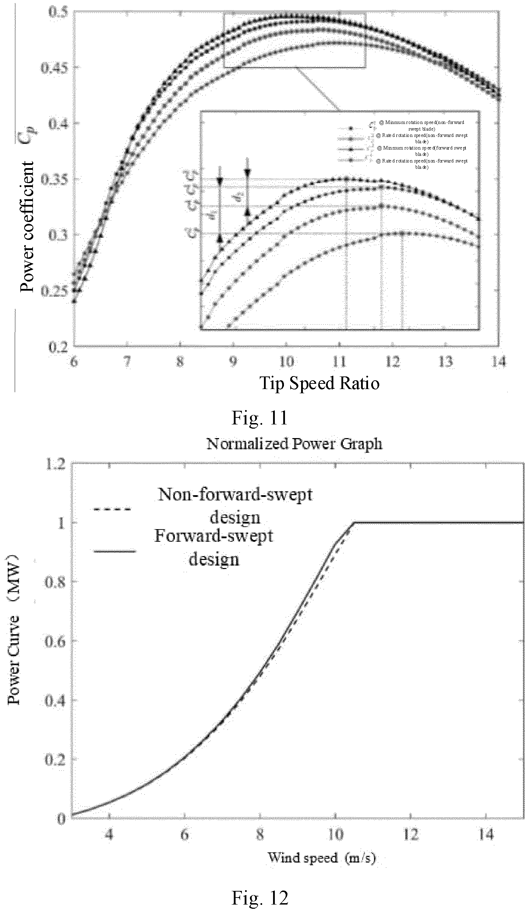

It can be seen from Fig. 11 that the maximum values of $C_p$ of the performance curves of the wind turbine system when the non-forward-swept blade is at the minimum speed and the rated speed are $C_p^1$ and $C_p^2$ respectively, and the variation amplitude of the maximum value of $C_p$ is $d_1$, where $d_1 = C_p^2 - C_p^1$; the maximum values of $C_p$ the performance curve of the wind turbine system when the forward-swept blade is at the minimum speed and rated speed are $C_p^3$ and $C_p^4$ respectively, and the variation range for the maximum value of $C_p$ is $d_2$, where $d_2 = C_p^4 - C_p^3$. Since the forward-swept blade has its own positive direction tip torsion compensation, the aerodynamic performance of the blade will not deviate too much from the design operation point, so $d_2 < d_1$ and $C_p^4 > C_p^2$.

It can be seen from Fig. 12 that the forward-swept blade can avoid excessive negative direction torsion deformation due to the bend-twist coupling effect through the positive direction torsion compensation, thereby ensuring that the operation angle of attack of the blade will not deviate too much from the optimal design angle of attack before the rated power is reached, so that the blade can be close to the optimal lift-to-drag ratio, thereby maintaining the power coefficient at a high level and avoiding the loss of annual power generation of the wind turbine system.

Embodiments of the present application further provide a wind turbine system, which includes the forward-swept wind turbine blades as described above and may be a horizontal-axis wind turbine system.

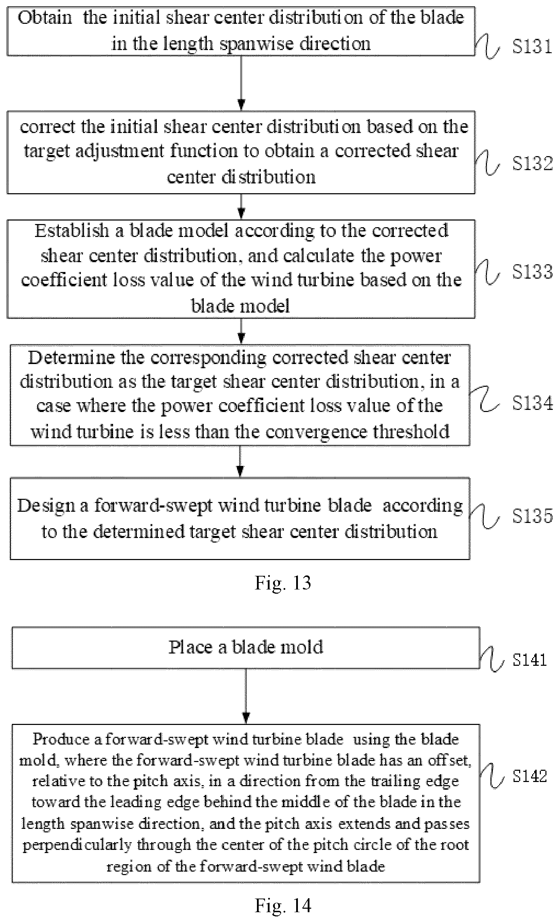

Embodiments of the present application further provide a design method for the forward-swept wind turbine blade, which is used to design the forward-swept wind turbine blade as described above. Referring to FIG. 13, the design method for the forward-swept wind turbine blade includes steps 131 to 135.

In step 131, an initial shear center distribution of the blade in the length spanwise direction is obtained. The initial shear center distribution can be calculated using the above method with the blade that is in a state of a non-forward-swept blade (i.e., non-forward-swept blade design), such as the curve represented by the dotted line in Fig.6.

In step 132, the initial shear center distribution is corrected based on the target adjustment function to obtain a corrected shear center distribution. The target adjustment function can be expressed as:

$$f(x) = a_1 x^2 + a_2 x + a_3$$

where x represents the position of a cross-section of the blade in the length spanwise, and f(x)is the shear center distribution corresponding to the position $x$, and $a_1$, $a_2$, and $a_3$ are coefficients.

Specifically, as shown in Fig. 6, the coordinates X-Y are established at the blade root, and $x_1$ is selected as the starting position of the forward-swept, $x_2$ is selected as the starting position of the blade tip, $x_3$ is selected as the spanwise position of the blade tip; a position is selected out where $f(x_1)$ (i.e., $y_1$ ) coincides with the shear center of the non-swept design blade, and the percentage of distance between such the position and the leading edge is $y_1$; a position is selected out where $f(x_3)$ (i.e., $y_3$ ) is the cross-sectional position of the blade tip, and the percentage of the distance between the shear center thereof and the leading edge is $y_3$, for example, 60%; a position is selected out where $f(x_2)$ (i.e., $y_2$ ) is close to the blade tip, and the percentage of the distance between the shear center thereof and the leading edge is $y_2$, where $x_2 \in [1/3 \times L, L]$, L representing the blade length along the pitch axis, $y_2 \in [y_1, 0.8 \times y_3]$. According to the above method, three sets of coordinates *(x, y)* are selected, and the above target adjustment function is used to establish a ternary equation to calculate and obtain $a_1$, $a_2$, $a_3$, so that a specific target adjustment function can be obtained. Specifically, $f(x_1)$=35% is selected, where $x_1$=0.3L; $f(x_2)$=33% is selected, where $x_2$=0.5L; $f(x_3)$ is selected, where $x_3$=L, and the non-homogeneous equation group is solved to obtain $a_1$=0.9143, $a_2$=-0.8314, and $a_3$=0.5171.

Assuming that the initial shear center distribution can be represented by SC(x), the initial shear center distribution at different positions along the length direction of the pitch axis of the non-forward-swept blade can be calculated. Similarly, the correction value of the corresponding position of the non-forward-swept blade in the length direction of the pitch axis can be calculated using the target adjustment function, that is, the target adjustment function value *f(x)*. The initial shear center distribution SC(x) of each position of the non-forward-swept blade in the length direction of the pitch axis is added to the target adjustment function value *f(x)* of the corresponding position to obtain the corrected shear center distribution, that is, the position of the shear center distribution of the blade with forward-swept design from the leading edge. Similarly, the correction of the positions of the neutral axis and the pitch axis of the blade from the leading edge can be achieved, that is, the target adjustment function value is added to each of the positions of the neutral axis and the pitch axis of the non-forward-swept blade, to obtain the positions of the neutral axis and the pitch axis of the corrected blade (i.e., in a forward-swept design) from the leading edge.

In step 133, a blade model is established according to the corrected shear center distribution, and the power coefficient loss value of the wind turbine based on the blade model is calculated;

Specifically, the blade model includes the structural parameters of the blade, the aerodynamic parameters of the blade, the environmental parameters related to the manufacture of the blade (such as air density, etc.), and the like. The structural parameters include the stiffness, moment of inertia of each section of the blade, and the like; the aerodynamic parameters of the blade include the chord length, torsion angle distribution, aerodynamic shape of the blade, and the like. By determining the positions of the corrected blade shear center distribution, neutral axis, pitch axis, and the like, the relevant parameters designed in the blade model can be determined, and then the structure of the blade to be manufactured can be determined. When the blade structure is determined, the power performance curve of the wind turbine system during the operation of the blade under the blade model can be calculated. In the calculation process, the bend-twist coupling effect is considered to obtain the power coefficient $C_p$ of the unit at the minimum speed and the rated speed. The power coefficient loss value of the wind turbine can be calculated according to the following formulas.

For example, the expression of the power coefficient loss value of the wind turbine is:

$$d = C_{p\_spec} - C_{p\_min}$$

where d is the power coefficient loss value of the wind turbine, $C_{p\_spec}$ is the maximum of the power coefficient in the performance curve of the wind turbine at rated speed, and $C_{p\_min}$ is the maximum power coefficient in the performance curve of the wind turbine at minimum speed. Those skilled in the art may also choose other methods to calculate the power coefficient loss of the wind turbine, which is not limited herein.

In step 134, when the power coefficient loss value of the wind turbine is less than the convergence threshold, the corresponding corrected shear center distribution is determined as the target shear center distribution.

In some embodiments, if the wind turbine power coefficient loss value is greater than or equal to the convergence threshold, the shear center distribution data is continuously corrected based on the target adjustment function; a corresponding blade model is established based on the re-corrected shear center distribution data; and the power coefficient loss value of the wind turbine based on the blade model is calculated until the wind turbine power coefficient loss value is less than the convergence threshold. The convergence threshold can be set according to the actual demand for the power coefficient. For example, at the rated speed, the decrease of $C_p$ does not exceed 0.1, that is, the convergence threshold *tol* is 0.1. Specifically, the above determination method of the target adjustment function is repeated, the appropriate three sets of coordinates are reselected to obtain a new target adjustment function, the shear center distribution data is corrected based on the new target adjustment function, and the corresponding blade model after the re-modification is obtained, the wind turbine power coefficient loss value under the blade model is calculated, and is judged with the convergence threshold until the power coefficient loss value of the wind turbine is less than the convergence threshold, and determine the final target adjustment function and the corresponding blade model, and shear center distribution, where the corrected shear center distribution is the target shear center distribution.

In step 135, a forward-swept wind turbine blade is designed according to the above determined target shear center distribution. Specifically, the position from the leading edge can be determined according to the target shear center distribution, thereby achieving an offset from the middle of the blade to the blade tip to obtain the forward-swept wind turbine blade.

Embodiments of the present application further provide a manufacturing method for the forward-swept wind turbine blade. Referring to FIG. 14, the manufacturing method for the forward-swept wind turbine blade includes steps 141 to 142.

In step 141, a blade mold is placed; specifically, according to the above-mentioned corrected target adjustment function value, the blade shear center distribution, and the corresponding blade model, the placement position of the blade mold is adjusted, so that the positions that the shear center distribution, the pitch axis, and the neutral axis of the blade to be manufactured (i.e., the forward-swept wind turbine blade) from the leading edge conform to the corrected determined positions.

In step 142, a forward-swept wind turbine blade is produced using the blade mold. The forward-swept wind turbine blade has an offset, relative to the pitch axis, in a direction from the trailing edge toward the leading edge behind the middle of the blade in the length spanwise direction. The pitch axis extends and passes perpendicularly through the center of the pitch circle of the root region of the forward-swept wind blade.

The distance from the tip point of the tip region of the forward-swept wind turbine blade to the flap-wise plane is 0.2m to 1.5m in the direction from the trailing edge to the leading edge. The flap-wise plane of the blade is defined by the flap-wise direction of the forward-swept wind turbine blade and the pitch axis. The distance between the cross-section in the middle of the forward-swept wind turbine blade to the pitch circle of the root region is 1/5 to 3/5 of the length of the blade.

As described above, in the design method for the forward-swept blade in the embodiment of the present application, the shear center distribution of the blade in the spanwise direction is first obtained, the shear center distribution based on the target adjustment function is corrected, a blade model is established according to the corrected shear center distribution, and the power coefficient loss value of the wind turbine based on the blade model is calculated. When the power coefficient loss value of the wind turbine is less than the convergence threshold, the corresponding corrected shear center distribution is confirmed to be the target shear center distribution and the aforementioned forward-swept wind turbine blade is designed according to the target shear center distribution.

Since the correction of the shear center distribution is based on the power coefficient loss value of the wind turbine, if the power coefficient loss value of the wind turbine is less than the convergence threshold, it means that the power coefficient loss value of the wind turbine is very small. At this time, the shear center distribution is adjusted to be close to the leading edge. The forward-swept wind turbine blade obtained based on this can be compensated by positive direction torsion to avoid excessive negative direction torsion deformation of the blade due to the bend-twist coupling effect. Therefore, before the rated power is reached, it can be ensured that the operation angle of attack of the blade will not deviate too much from the optimal design angle of attack, so that the blade can be close to the optimal lift-to-drag ratio, thereby maintaining the power coefficient at a higher level, achieving the purpose of minimizing the loss of the optimal power coefficient at different speeds, and improving the overall power generation of the wind turbine system.

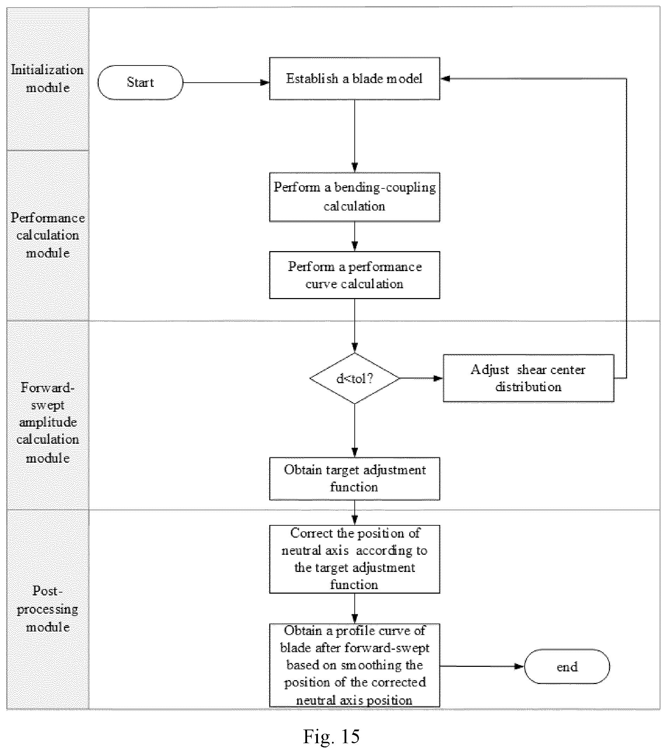

To facilitate understanding by those skilled in the art, the design method for the forward-swept blade in embodiments of the present application is described in detail below in conjunction with the calculation process in Fig. 15, which shows a calculation process of the initialization module, a performance calculation module, a forward-swept amplitude calculation module, and a postprocessing module.

The initialization module is configured to establish a blade model, including obtaining the aerodynamic shape and structural design model of the existing blade, setting environmental parameters such as air density, etc.

The performance calculation module is configured to calculate the performance curves of the wind turbine system at the minimum speed and rated speed. During the calculation process, the bend-twist coupling effect is considered, and the power coefficient loss value d of the wind turbine is calculated by finding the maximum values $C_p$ of the two optimal performance curves at the minimum speed and the fixed speed.

The forward-swept amplitude calculation module is configured to adjust the current shear center distribution toward the leading edge in compliance with the function $f(x) = a_1x^2+a_2x+a_3$ according to the current shear center distribution, and recalculate the power coefficient loss d according to the adjusted model. When the convergence condition d < *tol* (i.e., the convergence threshold) is met, the adjustment of the shear center distribution is terminated and the target adjustment function $f(x)$ is recorded.

The post-processing module is configured to correct the position of the neutral axis to the leading edge of the blade according to the target adjustment function $f(x)$. Specifically, the target adjustment function is added to the position of the neutral axis of the original blade in the leading edge, and then the result is smoothed to obtain the position of the new neutral axis of the forward-swept wind turbine blade to complete the design adjustment.

Although the present application has been described with reference to exemplary embodiments, it should be understood that the present application is not limited to the configuration of the above-described embodiments. On the contrary, the present application is intended to cover various modifications and equivalent configurations. In addition, although the various elements of the disclosed present application are shown in various exemplary combinations and configurations, other combinations including more and fewer elements also fall within the scope of the present application.

**Claims**

1. A forward-swept wind turbine blade, comprising:

   a blade body extending in a length spanwise direction between a root region and a tip region of a blade; and
   a pitch axis extending and running perpendicularly through a center of a pitch circle of the root region, wherein an offset in a direction from a trailing edge to a leading edge with respect to the pitch axis is provided in the blade behind a middle of the blade in the length spanwise direction.

2. The forward-swept wind turbine blade according to claim 1, wherein a tip point of the tip region of the blade is along the direction from the trailing edge to the leading edge, a distance by which the tip point deviates from a flap-wise plane of the blade is 0.2m to 1.5m, and the flap-wise plane of the blade is defined by the pitch axis and a flap-wise direction of the blade.

3. The forward-swept wind turbine blade according to claim 1, wherein a distance from a cross-section in the middle of the blade to the pitch circle of the root region is 1/5 to 3/5 of a length of the blade.

4. A wind turbine system, comprising the forward-swept wind turbine blade according to any one of claims 1-4.

5. The wind turbine system according to claim 4, wherein the wind turbine system is a horizontal-axis wind turbine system.

6. A design method for a forward-swept wind turbine blade, comprising:

   obtaining an initial shear center distribution of the blade in a length spanwise direction;
   correcting the initial shear center distribution based on a target adjustment function to obtain a corrected shear center distribution;
   establishing a blade model according to the corrected shear center distribution, and calculating a wind turbine power coefficient loss value based on the blade model; and
   determining the corrected shear center distribution as a target shear center distribution, under a condition that the wind turbine power coefficient loss value is less than a convergence threshold; and
   designing the forward-swept wind turbine blade according to the target shear center distribution.

7. The design method according to claim 6, wherein the target adjustment function is expressed as:

$$f(x) = a_1x^2+a_2x+a_3$$

   where $X$ represents a position of a cross-section of the blade in the length spanwise direction, $f(x)$ is the shear center distribution corresponding to the position $x,$ and a1, a2, and a3 are coefficients.

8. A manufacturing method for a forward-swept wind turbine blade, comprising:

   Placing a blade mold; and
   producing a forward-swept wind turbine blade using the blade mold, wherein an offset in a direction from a trailing edge to a leading edge with respect to a pitch axis is provided in the forward-swept wind turbine blade behind a middle of the blade in a length spanwise direction, and the pitch axis extends and runs perpendicularly through a center of a pitch circle of a root region of the forward-swept wind turbine blade.

9. The manufacturing method according to claim 8, wherein a tip point of a tip region of the forward-swept wind turbine blade is along a direction from the trailing edge to the leading edge, a distance by which the tip point deviates from a flap-wise plane of the blade is 0.2m to 1.5m, and the flap-wise plane of the blade is defined by the pitch axis and a flap-wise direction of the forward-swept wind turbine blade.

10. The manufacturing method according to claim 9, wherein a distance from a cross-section in the middle of the forward-swept wind turbine blade to the pitch circle of the root region is 1/5 to 3/5 of a length of the blade.

Fig. 1

Fig. 2

Fig. 3

Fig. 4

Fig. 5

Fig. 6

(a)

Non-forward-swept blade
(Deformed state)

(b)

(c)

Fig. 7

Spanwise (m)

(a)

Forward-swept blade
(Deformed state)

(b)

(c)

Fig. 8

Fig. 9

Fig. 10

Fig. 11

Fig. 12

Obtain the initial shear center distribution of the blade in the length spanwise direction ⟿ S131

correct the initial shear center distribution based on the target adjustment function to obtain a corrected shear center distribution ⟿ S132

Establish a blade model according to the corrected shear center distribution, and calculate the power coefficient loss value of the wind turbine based on the blade model ⟿ S133

Determine the corresponding corrected shear center distribution as the target shear center distribution, in a case where the power coefficient loss value of the wind turbine is less than the convergence threshold ⟿ S134

Design a forward-swept wind turbine blade according to the determined target shear center distribution ⟿ S135

Fig. 13

Place a blade mold ⟿ S141

Produce a forward-swept wind turbine blade using the blade mold, where the forward-swept wind turbine blade has an offset, relative to the pitch axis, in a direction from the trailing edge toward the leading edge behind the middle of the blade in the length spanwise direction, and the pitch axis extends and passes perpendicularly through the center of the pitch circle of the root region of the forward-swept wind blade ⟿ S142

Fig. 14

| Initialization module | Start ⟶ Establish a blade model |
|---|---|
| Performance calculation module | Perform a bending-coupling calculation<br>Perform a performance curve calculation |
| Forward-swept amplitude calculation module | d<tol?  ⟶ Adjust shear center distribution<br>Obtain target adjustment function |
| Post-processing module | Correct the position of neutral axis according to the target adjustment function<br>Obtain a profile curve of blade after forward-swept based on smoothing the position of the corrected neutral axis position  ⟶ end |

Fig. 15

## INTERNATIONAL SEARCH REPORT

| International application No. |
| --- |
| **PCT/CN2024/070206** |

### A. CLASSIFICATION OF SUBJECT MATTER

F03D1/06(2006.01)i

According to International Patent Classification (IPC) or to both national classification and IPC

### B. FIELDS SEARCHED

Minimum documentation searched (classification system followed by classification symbols)

IPC:F03D

Documentation searched other than minimum documentation to the extent that such documents are included in the fields searched

Electronic data base consulted during the international search (name of data base and, where practicable, search terms used)

CNTXT, ENTXTC, WPABSC, CNKI: 叶片, 风力, 风电, 前掠, 前弯, 前缘, 后缘, 偏移, 剪切中心. VEN, ENTXT, DWPI, WPABS: blade, wind power, forward sweep, forward bend, leading edge, trailing edge, deviation, shear center.

### C. DOCUMENTS CONSIDERED TO BE RELEVANT

| Category* | Citation of document, with indication, where appropriate, of the relevant passages | Relevant to claim No. |
| --- | --- | --- |
| X | 李义金 (LI, Yijin). "基于多体动力学方法的风力机动态响应研究 (Non-official translation: Research on Dynamic Response of Wind Turbine Based on Multi-body Dynamics Method)" 中国博士学位论文全文数据库 基础科学辑 (Non-official translation: Basic Sciences, China Doctoral Dissertations Full-text Database), 15 January 2020 (2020-01-15), chapters 6.2-6.3 | 1-5, 8-10 |
| X | CN 114992043 A (YANGZHOU UNIVERSITY) 02 September 2022 (2022-09-02) description, paragraphs 19-50, and figures 1-5 | 1-5, 8-10 |
| X | US 2007207033 A1 (APPA KARI et al.) 06 September 2007 (2007-09-06) description, paragraphs 53-54, and figure 9 | 1-5, 8-10 |
| A | CN 207064139 U (BEIJING GOLDWIND SCIENCE & CREATION WINDPOWER EQUIPMENT CO., LTD.) 02 March 2018 (2018-03-02) entire document | 1-10 |
| A | US 2011052404 A1 (ZUTECK MICHAEL D) 03 March 2011 (2011-03-03) entire document | 1-10 |
| A | US 2015132141 A1 (STEGE JASON et al.) 14 May 2015 (2015-05-14) entire document | 1-10 |

☐ Further documents are listed in the continuation of Box C.          ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **25 March 2024** | **27 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/070206**

| Patent document cited in search report | | | Publication date (day/month/year) | Patent family member(s) | | | Publication date (day/month/year) |
|---|---|---|---|---|---|---|---|
| CN | 114992043 | A | 02 September 2022 | None | | | |
| US | 2007207033 | A1 | 06 September 2007 | US | 7789624 | B2 | 07 September 2010 |
| CN | 207064139 | U | 02 March 2018 | None | | | |
| US | 2011052404 | A1 | 03 March 2011 | None | | | |
| US | 2015132141 | A1 | 14 May 2015 | EP | 3066336 | A1 | 14 September 2016 |
| | | | | WO | 2015067387 | A1 | 14 May 2015 |

Form PCT/ISA/210 (patent family annex) (July 2022)

**EP 4 592 520 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211733479

- CN 202311863161